# EUROPEAN PATENT APPLICATION

(11) **EP 1 132 796 A1**
(43) Date of publication of application: **12.09.2001**
(21) Application number: 00104966.7
(22) Date of filing: 08.03.2000
(51) Int. Cl.: G06F 1/00

(54) **Mobile code and method for resource management for mobile code**

(71) Applicant: UNIVERSITE CATHOLIQUE DE LOUVAIN, 1348 Louvain la Neuve (BE)
(72) Inventor: Mas Ribès,Joan-Maria, 43206 Reus (ES)
(74) Representative: Kirschner, Klaus Dieter, Dipl.-Phys.

(57) **Abstract**

A mobile code linked to a certificate including at least a resource requirements list (RRL) including those resources needed by the mobile code to be properly executable plus those resources that are known a priori to be accessed when executing the mobile code. The unique certificate contains additionally an issuer of the certificate information identifying the entity issuing the certificate, a subject information identifying the mobile code to which the certificate is referred, and a validity period information stating the period of time within which the certificate is valid. When downloading or uploading a mobile code the RRL is transferred to the user informing the user of the resource requirements of the mobile code. An execution environment is provided in an execution peer of the user, the execution environment defining at least the resource access policy that will be applied to the mobile code on execution.

## Description

This invention relates to a mobile code and method for resource management for mobile code.

Nowadays, with the recent explosive growth of the Internet, the number of computer interconnected in a global communications network grows exponentially. Many view the Internet as a universal communications medium that can replace telephone, television and radio. The potential is there, but progress has been hampered by the open design of the network itself. It is still too easy to intercept, monitor and forge messages on the Internet, and people are reluctant to use the network for financially or legally sensitive data.

Computer networks are evolving at a very fast pace, and this evolution proceeds along several aspects. Network links are constantly improved, and technological developments lead to increased computational power in network nodes. With increase in size and performance of computer networks, network connectivity has become a basic feature of computers and many products in the consumer electronics industry. On the other hand, users can exploit network connectivity independently of their physical location. In this new scenario, mobile users can move together with their hosts across different locations and still find their working environment.

The problems faced by users of the Internet fall into two main categories: privacy and authentication. Privacy involves transmitting messages that cannot be altered or read en route, while authentication allows each party to a communication to be sure of the identity of the other. Cryptography holds the promise of a solution to these problems.

These developments lead to a widespread diffusion of services and applications, making it necessary to increase the customizability of services. Thereby, different classes of users are then enabled to tailor the functionality and interface to a service according to their specific configuration, needs and preferences. Finally, the dynamic nature of both the underlying network infrastructure and market requirements demand higher levels of extensibility and flexibility.

There exist already a number of patent publications related to security aspects and authorizations for mobile programs. The systems described in these patent publications have, however some serious drawbacks. First, whenever certification is used, the systems require the existence of a hierarchic certification infrastructure in place. Second, all the systems deal with authorization. And finally, these patent publications all talk about low-level resource access such as file permissions, program execution, and network access. Some examples of these patent publications are discussed below.

The US 5,412,717 A relates to a computer system security method and apparatus having program authorization information data structures. The authorization information is about low level resource access at operating system level. The only external resources available are the possibility to call another executable. Furthermore, the system needs to be implemented at an operating system level. The invention states that if all authorizations defined in the "Program Authorization Information" are not granted, the program can not be executed.

The US 5,892,904 A relates to a code certification for network transmission. A system is described to support the distribution of software over networks or off-line along with an Access Control List (ACL) for the program itself and a certificate that 'makes' the program secure for execution. In this case, the code production system submits the program and the ACL for the program to a certification authority, which sends back a certificate on the code and another one on the ACL for the program. At distribution time, the code is sent along with the ACL, the certificate on the code (which in fact is more a signature than a certificate) and another certificate on the ACL (again, this is more a signature by a CA over the ACL than a certificate). The contents of the ACL define the rights and authorizations a program has. In case not all of these authorizations are granted by the executing system or user, the program cannot run.

The US 5,892,904 A shows a system for certifying executable objects. The patent deals exclusively with program certification for network transmission. This certification guarantees program integrity, gives descriptive information on the program itself and information on the entity that certifies the program. This patent does not deal with any kind of authorization nor resource access.

The US 5,919,247 A relates to a method for the distribution of code and data updates over any network. Applications are seen as channels that can be subscribed to and updated. Whenever a user subscribes to a channel, the associated application is downloaded to the local disk and can be executed any number of times. On the other hand, there is the possibility to define an updating rate in which applications will be updated if necessary. This method basically deals with software downloading and updating and lacks, however, some important aspects on software downloading such as security and payment/licensing.

The US 5,978,484 A describes a system in which code to be sent through the network is associated with a "privilege request code", i.e. a set of rights the code may exercise, and digitally signed by a certification authority. A run-time system prevents the code from exercising unauthorized accesses. A certification hierarchy needs to be in place so that the user or executing system can verify the certificate attached to the program. The first drawback of the system is that it assumes the existence of a certification hierarchy in such a way that any user on the network can verify the validity of a given certificate. Such an infrastructure is not in place nowadays and will most likely never exist. On the other hand, it makes the distributing authority dependent on a certification authority, which is a strong requirement.

There are also a number of scientific publications dealing mobile code handling. Examples are: D. Balfanz and L. Gong. "Experience with Secure Multi-Processing in Java". Technical Report, Princeton University, September 1997; and G. Back and W. Hsieh. "Drawing the Red Line in Java". In Proceedings of the 7^{th} Workshop on Hot Topics in Operating Systems, March 1999. IEEE Computer Society; and G. Back, P. Trullmann, L. Stoller, W.C. Hsieh and J. Lepreau. "Java Operating Systems: Design and Implementation". Technical Report UUCS-98-015, University of Utah, August 1999; and G. Czajkowski and T. von Eicken. "JRes: A Resource Accounting Interface for Java". In Proceedings of the 1998 ACL OOPSLA Conference, Vancouver, BC, October 1998; and L. Gong, M. Mueller, H. Prafullchandra and R. Schemers. "Going Beyond the Sandbox: An Overview of the New Security Architecture in the Java Development Kit 1.2". In Proceedings of the USENIX Symposium on Internet Technologies and Systems, Monterey, CA, December 1997; and T. Tock, D. Sturman and R. Campbell. "Security, Delegation, and Extensibility". Technical Report, University of Illinois, November 1994; and T. von Eiken, C. Chang, G. Czajkowski, C. Hawblitzel, D. Hu and D. Spoonhower. "J-Kernel: a Capability-Based Operating System for Java". To appear in Secure Internet Programming: Security Issues for Distributed and Mobile Objects, Springer-Verlag Lecture Notes in Computer Science, 1999; and D.S. Wallach, D. Balfanz, D. Dean and E.W. Felten. "Extensible Security Architectures for Java". In Proceedings of the 16^{th} Symposium on Operating Systems Principles, October 1997, Saint-Malo, France.

A few years ago, Java, developed by Sun Microsystems, triggered most of the attention and expectations on code mobility. Being able to run on any platform, Java has become a preferred research and development language for code mobility. Since then, most code mobility research literature refers to Java even if the paradigms, methodologies or concepts exposed are general and independent of any language. The Java 1.2 approach to the security of mobile code is focused exclusively on control access to resources on the machine onto which the application is executed. Classes are grouped in domains defined on the basis of the origin of the code. The address of the server providing the code or the public key associated with the signature over the code define such domains. A user can then associate to each domain an access control list containing the resources made available to classes within a domain. The Java runtime maintains a mapping from objects to their protection domains and then to their permissions. Each resource manages the permissions by itself. Nevertheless, it has some important drawbacks. Precisely, privileges are assigned to code based on their origin and totally independent of the application it implements. There is no support for resource accounting, monitoring or reclamation, which are required from a system point of view. Furthermore, mobile code usually requires awareness of the location it is executed, and the resources and its state available to it.

Another totally different approach to resource management comes from research carried out in the past in the field of operating systems applied to type-safe languages such as Java. Type-safe languages provide the same functionality as a MMU (memory management unit) in classical operating systems, but within a single address space. The MMU is in charge of isolating address-spaces of different processes running on the same machine, and user and kernel execution modes.

Operating systems implemented with type-safe languages have several advantages over traditional operating systems with hardware-based MMU. One of the most time expensive operations on computers is context switching between user and kernel mode. These switches occur every time a user-space application makes a system call. Any operations on the file system, network access or keyboard read causes produces a context switch. Type-safe languages prevent from accessing variables or objects in an illegal way, opposed to the possibility in other languages like C/C++, in which one can access and modify the processes' memory. This feature makes unnecessary the use of MMU and boosts the performance of the system by avoiding context switching.

However, the concept of operating system limits the possibilities of such systems. The different prototypes deal exclusively with fair allocation of resources to different processes running on a machine, and provide applications with different ways to manage these resources. They lack, nevertheless, the possibility to externally define the resources available to an application.

Code mobility is exploited on an Internet scale, conceived to operate in large-scale settings with heterogeneous hosts connected by links at different bandwidths. This conception is opposed to distributed systems providing object migration that have been designed having in mind small-scale networks with high bandwidths. Mobile code is location and environment-aware and it takes actions based on such knowledge. Nevertheless, mobile code has some non-negligible risks regarding its security. A program going from computer to computer with the same privileges for the provider and the user is a non-acceptable risk for system administrators and users. Unless some precautions are taken, mobile code could read files, delete them, access the network impersonating the user or abuse of any of the resources the user has access to.

In view of the above, it is an object of the invention to provide a secured and scalable resource management at user level when using the code.

For achieving the above object, a mobile code comprises a resource usage needs section containing at least a resource requirements list (RRL) including those resources needed by the mobile code to be properly executable plus those resources that are known a priori to be accessed when executing the mobile code. The invention provides a secure resource management for mobile code on the receiving and executing peer. A programmer or software provider/distributor attaches a RRL containing a description of the resources required by the application in order to correctly run. This information is a list of the different resources the mobile code will eventually access. The semantics of this Resource Requirements List is "the programmer of this mobile code states that the application needs to access the resources in the RRL". The goal of the RRL is not to transfer authorization but to provide a basis for the resource management.

According to a preferred aspect of the invention, the resource usage needs section of the mobile code is a certificate which is unique for each different mobile code. Out of security reasons, it is preferred to include the RRL in a certificate linked to the mobile code. For example the "most important" certificate is the certificate which is attached, for example, via a soft link by means of a hash function on the mobile code. The RRL can be contained in this certificate.

According to a preferred aspect of the invention, the resource usage needs section of the mobile code contains, in addition to the resource requirements list, any of the following information: a) issuer of the certificate information identifying the entity issuing the certificate, b) subject information identifying the mobile code to which the certificate is referred, and c) validity period information stating the period of time within which the certificate is valid. Any of this information subjects serve to further improve the ability of the system to manage resources.

According to a further preferred aspect of the invention, the information as to the issuer of the certificate is a digest of the public key of the entity having produced the mobile code. By using a digest of the public key of the entity having produced the mobile code, the safety of this information is further improved as it is made more difficult to forge the identity of this entity.

According to a further preferred aspect of the invention, the information as to the issuer of the certificate is a public key of the entity having produced the mobile code. Using the public key as an identification of the entity having produced the mobile code along with the signature on the certificate, identifies and authenticates the producer and gives a high level of security to this identification information.

According to a further preferred aspect of the invention, the subject information is a hash of the mobile code. To use a hash of the mobile code as subject information ensures again a high level of security in relation to this information. As security is an important aspect in the handling of mobile code, the importance of the last mentioned aspects of the invention is substantial.

According to a further preferred aspect of the invention, the resource requirements' list contains any of the following information: a) name of the resource information specifying the type of resource. b) action on the resource specifying as to how the resource should be used, c) upper quantitative limit information stating the maximum usage of the resource from a quantitative point of view, and d) upper qualitative limit information stating the maximum usage of the resource from a qualitative point of view.

The more information is given about the resource requirements, the better is the basis for deriving a successful and tailored management. Therefore, if anyone or several or all of this information is provided, the results management is correspondingly improved.

According to a further preferred aspect of the invention, the mobile code and the certificate are logically linked by means of the code hash. This ensures that the mobile code and the certificate containing the information necessary for performing a good resource management are not separated in any stage of their coexistence so that the mobile code can, at any time, rely on the resource management based on the logically linked certificate.

According to a further preferred aspect of the invention, certificate or a sequence of certificates is linked to the mobile code and the RRL list, the certificate or certificates transferring trust from a principal trusted by the software consumer to the RRL certificate issuer. The certificate or the sequence of the certificate contains one or several certificates transferring authorization from a executing peer to the principal who signed the certificate containing RRL. If the certificate or the certificate sequences is/are valid , the run-time execution environment will define the resource location policy. This system contributes very much to the success of the transfer and usage of the mobile code.

Furthermore, a certificate containing the RRL contains a digest of the mobile code that is used to verify its integrity which is another security feature.

According to a further preferred aspect of the invention, the mobile code comprises Java programs and applications. As mentioned before, Java provides programs and applications which are not restricted to special platforms which means that also the resource management will be platform independent.

According to a further preferred aspect of the invention, the format of the certificate or certificates is SPKI. As stated below, the SPKI is a preferred format when putting the invention to practice as SPKI provides all the features which are desirable for the invention in an efficient and elegant way.

According to a further preferred aspect of the invention, an execution program is provided in an execution environment of the user, the execution program defining at least the resource access policy that will be applied to the mobile code on execution. Such execution program will be the most suitable tool to define the resource access policy which also has the advantage that the implementation of the resource access policy will be done by a program which is adapted to the RRL transmitted with the mobile code.

For achieving the above object a method for resource management for mobile code using a mobile code as discussed above comprises, in the case of downloading upon request a mobile code from a principal (software provider or distributor) to a user, in a the negotiation phase in the beginning of the downloading process, a RRL list is transferred from the principle to the user informing the user of the resource requirements of the mobile code. Whenever a peer requests to download mobile code, the RRL information is used in the negotiation protocol the goal of which is to ensure that the receiving peer has all resources required for the execution of the mobile code. Exactly this information is provided by this method in a most advantageous way. Whenever a peer requests to download or upload mobile code, the RRL information can be used in a negotiation protocol. The goal of this negotiation protocol is for the sender peer to ensure that the receiving peer has all resources the mobile application requires to execute.

According to a further preferred aspect of the invention, in the negotiation phase, the downloading process further includes user and/or platform authentication, specifying restrictions imposed by the mobile code distributor as to the user and/or platform involved, and/or payment/licensing evaluation, comprising the financial aspects of the mobile code transfer. The platform authentication offers some guarantees for the software producer/distributor that is a contribution to the deal is acknowledged and the mobile code is used in the proper way.

According to a further preferred aspect of the invention, after the negotiation phase, the mobile code is downloaded. This ensures that the mobile code is downloaded and only then downloaded if all the basic requirements for its execution have already been checked and verified as being available.

According to a further preferred aspect of the invention, the mobile code or upgrades thereof are is distributed from a service provider to a plurality of users, and wherein, in the case of upgrading, additional information is transmitted specifying which files need to be deleted, replaced or added. The mobile code and methods described so far can not only be used in a negotiation between two entities but also for distributing mobile code from a service provider to a plurality of users. It is advantageous that, for this application of invention, only a minimum of additional information is required which can be put into the resource usage needs section or the certificate containing the RRL.

For achieving the above object a method for resource management for mobile code using a mobile code as discussed above comprises, in the case of uploading upon request a mobile code from a resource owner to a user using a mobile code, in a the negotiation phase in the beginning of the uploading process, a RRL list is transferred from the resource owner to the user informing the user of the resource requirements of the mobile code. Here again, the same advantages are achieved as with the downloading process.

According to a further preferred aspect of the invention, in the negotiation phase, the uploading process further includes user and/or platform authentication information specifying restrictions imposed by the resource owner as to the user and/or platform involved, and/or payment/licensing evaluation information comprising the financial aspects of the mobile code transfer. Also in the uploading process, such information is valuable to conclude an acceptable deal and to optimize the resource management.

According to a further preferred aspect of the invention, after the negotiation phase, the mobile code is uploaded. This is again to make sure that the actual transfer of the mobile code is effected only after all the security and resource management information checks have been made.

For achieving the above object, in a method for transferring mobile code through an active network for resource management for mobile code using a mobile code of as discussed above, the network comprising a plurality of active network nodes, the active flow is composed of the following information: a) a mobile code that needs to be executed in a node which is crossed by the active flow, b) a RRL-list issued by the entity that sends the mobile code to the network, c) a certificate or a sequence of certificates whose first entry is a certificate from the network operator to the starting entity, and d) the data themselves. This method ensures in a most advantageous way that the mobile code with the resource usage needs section can also be used and transferred in an environment of active networks playing an ever increasing role in the global program and data transfer.

According to a further preferred aspect of the invention, when the active flow crosses a network operator boundary from an operator X to an operator Y, the exit node of the operator X adds a certificate to the sequence issued by network operator Y authorizing operator X to send active flows through its network. This is a simple and, therefore, advantageous way to ensure a safe transfer of the mobile code with the resource usage needs section within the active networks.

According to a further preferred aspect of the invention, an execution program is provided in an execution environment of the user, the execution program defining at least the resource access policy that will be applied to the mobile code on execution. As the certificate sequence with resource usage information is attached to the mobile code, this information can be used by the receiving peer to define the resource management policy on the mobile code at run-time.

According to a further preferred aspect of the invention, the execution program is transmitted together with the mobile code. Also the execution program could also be provided separately or on other storage media to the user, the transfer of the execution program together with the mobile code is an advantageous way of handling this matter.

According to a further preferred aspect of the invention, the method comprises any of the following steps: a) verifying that the mobile code integrity has not been compromised, b) reducing the certificate chain associated with the mobile code to verify trust transfer from the execution environment to the supplier, and c) create a process-like structure for the mobile code which isolates the mobile code from other programs running on the same execution environment.

Before executing the mobile code, the receiving peer reduces the certificate sequence that comes along with the mobile code. If the certificate or sequence of certificates is valid, the run-time execution environment will define the resource allocation policy based on the RRL along with the type of access to the resource and an upper limit on its usage. Any or all of these steps contribute to a smooth execution of the mobile code. Furthermore, the mobile programs are isolated one from each other. Also the access to resources is done through the execution environment avoiding influence or interference of mobile code and programs among each other.

According to a further preferred aspect of the invention, the resource allocation policy is defined by an intersection between the sequence of certificates, one of which contains the RRL, and the ACL local to the executing peer. In other words, authorization to access resources at run-time will be defined on the executing peer based on the RRL and the ACL of each peer and/or user. If the certificate or the certificate sequence of the certificates is valid, the run-time execution environment will define the resource location policy based on the RRL and the ACL. The ACL contains a list of principals known to the executing peer along with a maximum resource usage list per principal. Unknown principals can have a default maximum resource usage list too.

According to a further preferred aspect of the invention, the mobile code or the execution program or its reduced program is configured to discover that a given resource is available through the execution environment and to request access to it, and thus to dynamically request access to other resources, and wherein the execution environment will decide on run time whether to grant or to deny such access. One advantageous feature of the mobile code is its ability to discover the resources and other applications present or running on the target machine to be able to communicate or work with them. This gives rise to new security concerns for both the calling and the called code. Each one of them might impose its own access control based on an authenticated message exchange system, which helps to run the mobile code in a safe way. Another functionality of the execution environment is the dynamic allocation of resources not listed in the RRL. More specifically, the mobile code can dynamically discover resources on the executing peer. Therefore, the resource usage policy can be made dynamically updateable.

According to a further preferred aspect of the invention, for resources not listed in the RRL, if the resource is a build-in resource in the execution environment, the execution program will check its "run-time resource access policy" and determine, whether to grant access or not to the resource. This method takes advantage of the presence of the built-in resource and the general ability thereof.

According to a further preferred aspect of the invention, if the resource is another mobile code, this can define its own access policy stating to whom access should be granted, the advantage being that any resources which are available to anyone are integrated in the process in the execution environment almost automatically.

According to a further preferred aspect of the invention, wherein the execution program monitors and/or accounts for and/or reclaims the resources whenever its usage limit is exceeded depending on the level of trust the user has on the source of the mobile code, the resources made available to the application can be trusted to never exceed the allocated amount.

In the invention, resource needs are described and it is up to the executing environment to decide which ones are granted and which ones are not, based on their ACL and the trust path between themselves and the certifying programmer. This reflects a more generalized vision of resource as "anything a program can interact with" which is a much broader concept than the once present in the state of art. A main advantage of the invention is that it provides secure fine-grained access to resources, both quantitative and qualitative, for mobile code and that it is not restricted to provide an all or nothing access control to resources. Furthermore, in the invention, there is no need for a certificate infrastructure in order to validate the certificates or certificate sequences .

The invention also differs from the state of art specifically in that the mobile code comes along with a non-exhaustive list of required resources. The list is nevertheless only intended for execution environment information. The mobile programs could run with fewer/greater resources granted or discover new resources on the fly.

The execution environment embodying the invention allows, apart from controlling and managing access to resources, for collaboration between different programs running on this execution environment.

Embodiments of the invention are now described with reference to the attached drawings in which:
- Figure 1: is a block diagram view of the software producer system depicting the phases involved in the production of a mobile program;
- Figure 2: shows a download upon request case in which a software consumer requests to download a mobile program from a software distributor;
- Figure 3: shows an upload upon request case in which a resource requester contacts a resource owner and asks to upload a mobile program that will act as personalized interface with the resource;
- Figure 4: shows a broadcast / multicast of mobile programs or upgrades case in which a service provider broadcasts mobile programs to offer new services to its clients or upgrades/patches;
- Figure 5: shows an active flow crossing the active network between two execution environments.
- Figure 6: shows an execution environment for mobile code.

A software producer is the entity responsible for producing a mobile code or program. This principal can be a programmer, a department within a company, an organization, etc. The mobile code is any code or application that can be sent/received through the net and is, thus, susceptible of attacking the executing peer. The mobile code can also be a local code that has arrived at the peer through a network or applications on CDROM and distributed to the users.

The first step in the process is to attach a certificate to the mobile code stating which are the resource usage needs for the given program: the software producer writes a mobile program that wants to diffuse over the Internet. To do so it needs to attach to the mobile program a certificate detailing the resource usage needs of the mobile program. This certificate is unique for each different mobile application and contains the following information:
a) Issuer of the certificate:
   This is a unique identifier for the software producer. This needs not to represent a whole organization: it can be a programmer within a company, a research group or an open software group. Practically, it will be a digest (or hash) of the public key of the software producer, or the key itself.
b) Subject:
   A value that uniquely identifies the mobile program to which the certificate is referred. In cryptographic words, this will be a hash of the mobile program.
c) Validity period:
   This states from when to when the given certificate and thus the information contained in it is valid. This field allows for producing demo software with short validity periods, or release software with long ones.
d) Resource Requirements List (RRL):
   This list should contain those resources needed by the mobile program without which it is unable to execute, plus those resources that the software producer knows a priori that will be accessed. For each entry of the list there should be the following information which describes precisely the access to the resource:
   d1) Name of the resource:
      This name can be general specifying the type of resource, or more detailed, for example the resource manufacturer. The name can have constructor like 'any', or 'prefix'. For example, C:\Temp\^{*} stands for any file in the temporary directory.
   d2) Action of the resource:
      A statement as to how the resource should be used. For example, if accessing a webcam, actions supported could be read (the images), zoom, on, off, focus and move.
   d3) Upper quantitative limit:
      This statement relates to the maximum usage of the resource from a quantitative point of view, for example writing 150Mbytes to disk or allocating 30Mbytes of memory.
   d4) Upper qualitative limit:
      This statement relates to the maximum usage of the resource from a qualitative point of view, for example a network connection with 10Mbits/sec, or a 4Mbits/sec video decoder.

With all the previous information, the software producer creates a certificate and attaches it to the mobile program. Here, "attach" should not be understood as a physical link, but a logical one. Precisely, a characteristic of cryptographic hashing functions is that for two different inputs, the result will be different. Moreover, it is computationally impossible, given an input, to find another one that generates the same output. Thus, mobile program and certificate are logically linked.

The certificate fields described above are those required. However, a certificate can contain some optional information such as the certification authority (entity capable of generating certificates) of the issuer, an address with detailed information on the mobile application, etc.

It should be noted that the RRL certificate is only a requirements list issued by the programmer of the mobile program. As can be seen in the following section, this certificate alone provides no security at all. Upon software distribution, the mobile program and the RRL certificate will be accompanied by a sequence of certificates transferring trust from a principal trusted by the software consumer to the RRL certificate issuer.

The distribution of mobile applications and programs can follow different patterns. In this section, different scenarios of mobile software distribution are presented. It should be noted that this section does not deal with classical software download from the Internet (ftp, http, etc), but only with mobile applications that take advantage of the invention.

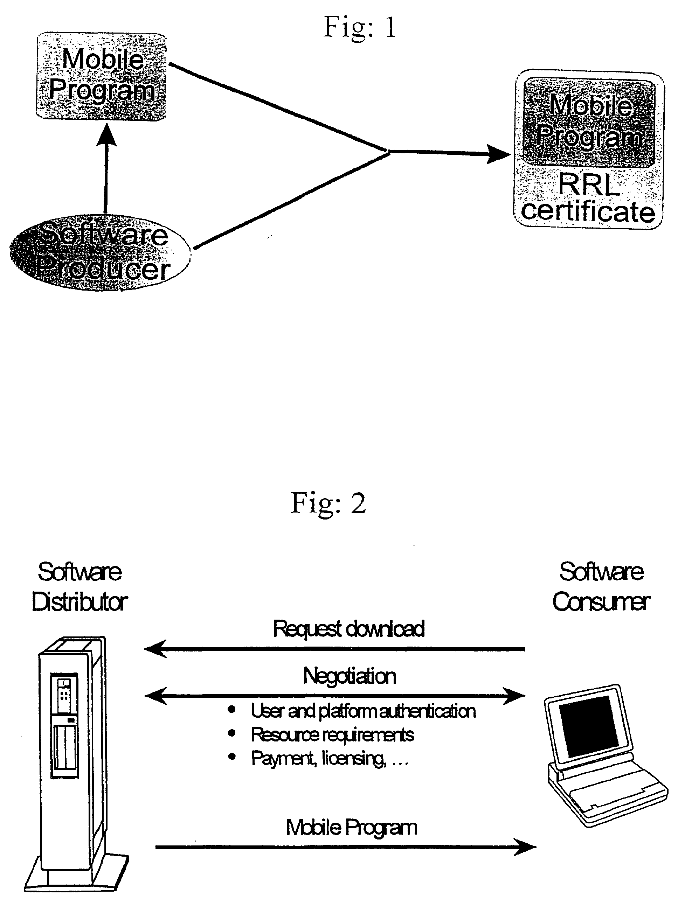

Figure 2 shows the interactions between a software distributor and a software consumer in the 'download upon request' case. A user or device contacts a software distributor and requests to download a specific piece of software. When the software distributor receives such a request, it starts a negotiation phase previous to the downloading of the mobile program. This negotiation comprehends several sub-phases:
a) User and/or platform authentication:
   A software distributor may, and probably will, impose restrictions as to whom or where the software is being downloaded. Software producers or distributors may require software to be downloaded onto secure platforms that provide some guarantees as of there will not be any interference on program execution.
b) Resource requirements:
   In this phase, the software distributor informs the consumer of the resource requirements on the mobile program. The objective of this phase is to avoid the downloading of software that will not be able to execute due to lack of resources. Note that the RRL is not exhaustive, since, by definition, mobile code should be able to discover resources present on the executing platform. The software consumer answers back to the distributor with a list of principals it trusts and to whom it will grant access to the resources. It is the distributor's responsibility to provide a sequence of certificates transferring trust from one of those principals to the principal that issued the RRL, along with the RRL certificate and the mobile program.
c) Payment / licensing / evaluation:
   Since not all software is free of charge, this phase deals with the financial aspects of software distribution. Here, software distributor and consumer reach an agreement, possibly with proof of payment or license, before the downloading of the mobile program. Note that the consumer may be requesting an evaluation software. In this case, the only difference will be that the RRL certificate will have a short validity period, and platform authentication as described in the previous phase becomes mandatory in order to avoid illegal usage of the software.

The last step in the process is the actual download of the mobile program, the RRL certificate and a sequence of certificates that transfer trust from the software consumer down to the principal that issued the RRL certificate. Along with these data, the software distributor will most likely send a description of the mobile code with information such as name, version, etc. Software integrity is assured by the subject field in the RRL certificate which contains for example the result of a hash function on the mobile program file. If privacy is needed, any protocol cryptographic protocol may be used.

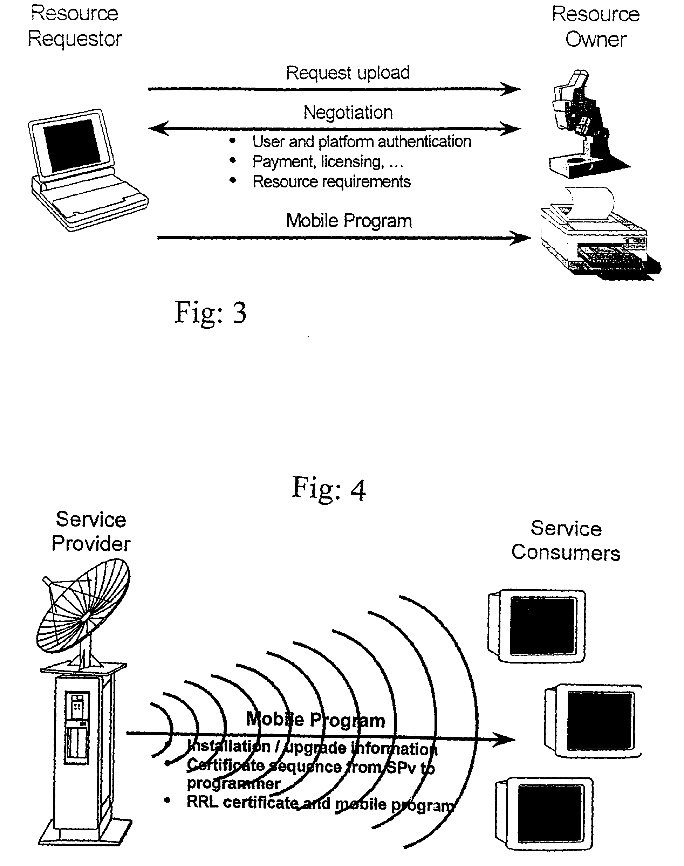

Figure 3 shows a case in which a computer or device wants to access a resource residing on a remote computer. A resource requester contacts a resource owner and asks to upload a mobile program that will act as personalized interface with the resource. Examples of this are analyzing images of an electronic microscope or convert data from a compressed format to postscript before printing which means an application wanting to get some specific information from an electronic microscope or printing a compressed image. However, the requestor may not want to access directly the resource, but use a specific interface providing the desired functionality. This is done by sending a mobile application to the resource owner system which, in the first case, extracts locally the information from the microscope images and sends it back to the application or, in the second case, converts from a compressed image format to postscript before sending to the printer, increases the performance of the application.

The protocols between peers are basically the same as in previous case of the communication between a software distributor and a consumer, with the exception that here there is a request to upload mobile code instead of downloading. As for the negotiation phase, user and platform authentication will be used here by the resource owner, since it can have its own policy as of who can upload software to the system. On the other hand, the payment/licensing phase can be used here whenever the resource requestor should pay to access the resource. An example would be sending a mobile program that queries a remote database for which a subscription is required.

Figure 4 shows the case of a service provider with several subscribers broadcast or multicasts mobile programs to all or some of its clients. This mobile code can be whether a new mobile program that the service provider whishes to install on all its client platforms, or an upgrade/patch to already existing applications of the subscribers' systems.

Given the nature of the broadcast scenario, in this case there is not the possibility of an interactive protocol between service provider and consumers. Therefore, when the service provider broadcasts the mobile program along with some extra information:
a) Installation / upgrade information:
   The installation information is basically the same information about the mobile program sent in the earlier cases. In the case of upgrading, the service provider needs to specify which files need to be deleted, replaced or added.
b) Certificate sequence:
   If, in this scenario, the receiving systems are subscribed to a service and thus there is already a trust relationship, the service provider needs only to provide the sequence of certificates transferring trust from itself to the programmer. The service provider itself may be also a software producer, in which case the certificate sequence will be empty.
c) RRL certificates and mobile program as in previous cases.

The case in which a service provider or software distributor sends a mobile program to a single receiver is a special case of the one presented above.

Active networks are a hot topic of research nowadays. The idea behind active networks is the possibility to configure each node of the network as a data flow traverses it. The active flow carries the data along with code that is executed by each active node and that does any processing on the flow. This processing can be from deciding which link the flow should follow up to reducing the quality of a video flow depending on the capacity of the link.

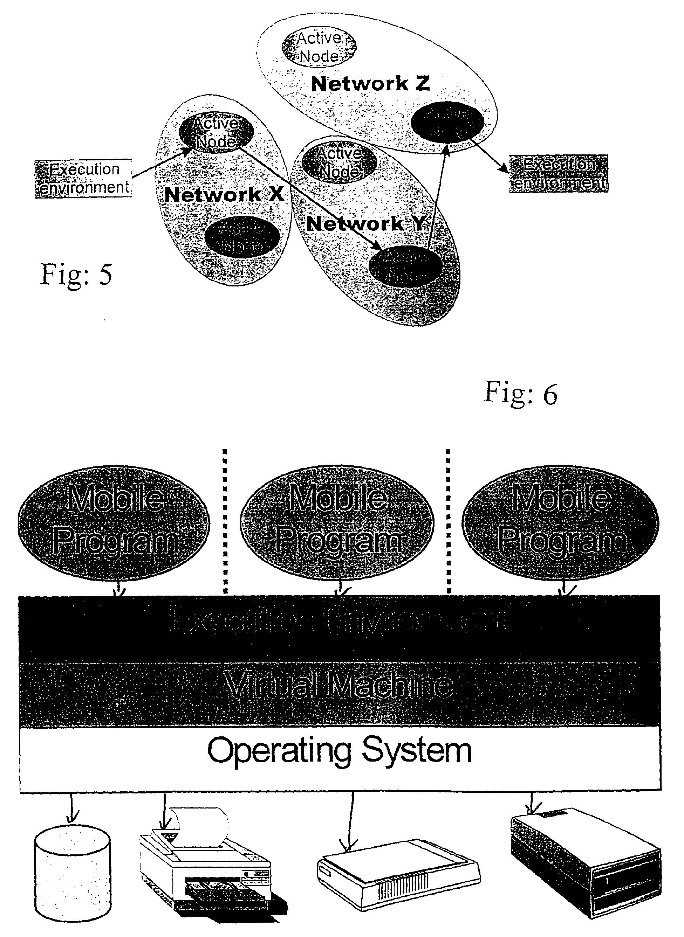

Figure 5 shows a scenario in which a flow between two execution environments, i.e. computers, crosses several active nodes or routers from different network operators. Any negotiation between active nodes belonging to the same or different network operators are not possible in this case. An active flow is composed of the following information:
a) The mobile code that needs to be executed in every node the flow crosses.
b) RRL certificate issued by the originating execution environment, the entity that sends the mobile code to the network.
c) A sequence of certificates whose first entry is a certificate from the network operator X to the execution environment. This certificate allows the flow to cross all active nodes belonging to operator X. When the flow crosses an operator boundary, the exit node of operator X adds a certificate to the sequence issued by network operator Y authorizing operator X to send flows through its network.
d) The data itself.

The certificates between network operators reflect real-world deals between network operators. An operator Y may authorize operator X to cross its network, but imposing some limits to the resources available to mobile code sent. In this case, there is a particular need for the active node to control the resources made available to "foreign" mobile programs.

The last phase involved in the present invention is mobile code security during execution and secured resource management. The mobile program has gotten to the executing system, or it is already present on the system. The execution environment, that is the software in charge of executing a mobile program, needs to meet some requirements so that the security of the system is not compromised (see Fig. 6). When a mobile program in launched, the execution environment performs the following steps:
a) Verify that the mobile program integrity has not been compromised. This is done by computing the hash function on the mobile program and verifying that the result is the same as in the RRL certificate.
b) Reduce the certificate chain associated with the mobile program to verify that trust is passed from the executing environment to the programmer or the issuer of the RRL certificate. To do this, the execution environment needs to access its own access control list (ACL) or the ACL of the user.
c) Define the resource access policy that will be applied to the mobile program on execution. This resource access policy is the intersection between the RRL and the ACL plus certificate sequence reduction. Note that this resource access policy refers only to those resources specified in the RRL and the ACL. Mobile programs can dynamically request access to other resources: the execution environment will decide on run-time whether to grant or deny such access.
d) Create a process-like structure for the mobile program, which isolates the program from other programs running on the same execution environment. The process abstraction also enforces the program to go through the execution environment in order to access any resource.

Whenever a mobile program requests access or tries to access a resource, the execution environment checks in the resource access policy of the process whether it has access to the resource or not. If it does, it will provide a capability that will monitor, account for and reclaim the resource whenever its usage limit is exceeded. There are, nevertheless, exception to this: low level resources, that is CPU time and memory, cannot be managed through capabilities; the execution environment manages them directly.

As stated above, the mobile code has the ability to discover the system on which it is being executed and take advantage of the resources available. This means that a program can discover that a given resource is available through the execution environment and request access to it. This resource can be a built-in resource in the execution environment or a software-based resource, i.e. any other mobile program that allows being called.

If the resource is a built-in one in the system, the execution environment will check its "run-time resource access policy" and determine whether to grant access or not to the resource. If, on the other hand, the resource is another mobile program (a video decoder or a decryption service for example) that gives access to anyone (it has not defined a its own resource access policy), access is granted too.

In case the software-based resource defines its own access policy, the execution environment will query the resource itself as to whether access is granted or not. This means that mobile programs available as resources on a system have the ability to manage and define who (that is which mobile programs) can access them.

As stated above, security and privacy is a major concern with the handling of mobile code to cope with these requirements, one relies on cryptography. There are many different ways to implement cryptographic features in a program or on data. However, one particular format, the Simple Public Key Infrastructure or SPKI-format is particularly adapted for the purposes of the invention as will be described below.

Cryptography provides a means whereby two people can communicate openly in such a way that a third party is unable to determine or alter what is being said. By assuring privacy, cryptography indirectly provides authentication because only the communicating parties know how to encrypt and decipher each other's messages. A form of cryptography known as public-key cryptography appears to be best suited to fulfilling the requirements of the Internet. Each user of a public-key cryptosystem holds a pair of related keys. Anything encoded with one key can only be decoded by its counterpart. Each user keeps one key secret and makes the other publicly available. Thus, other people can employ the user's public key to send messages that only the user can read, or the user can "sign" a message with her private key to authenticate it - other people can apply the user's public key to verify that the message came from the user. Crucial to the operation of a global public-key cryptosystem on the Internet is a practical and reliable means of having access to the public keys, called a Public Key Infrastructure or PKI.

Much recent work has focused on moving away from identity-based PKIs to a more general system based on attributes or credentials. SPKI and SDSI (Simple Distributed Security Infrastructure) are two of such efforts. These two initiatives merged later into SPKI, given that their approach to security infrastructures and certificates were almost identical. SPKI is designed to "facilitate the construction of secure systems" and "provides simple, clear terminology for defining access-control lists and security policies". It is also an attempt to move away from identity-based certification and towards a system based on roles and credentials.

SPKI calls its entities "principals" and defines them to be digital signature verification keys. Thus, SPKI principals are public keys that can make declarations by issuing verifiable signed statements. Those signed statements come mainly in the form of certificates. SPKI provides for so called SPKI authorization certificates as a basic form of certificates which transfer some specific authorization or permission from one principal to another. Because a certificate merely transfers authorizations, rather than creating them, it is required to inject authorizations into a chain of certificates. This is done by means of ACL-entries (ACL = Access Control List). An ACL-entry lives on the machine of the verifier, leading to the observation that all authorization flow is in a circuit -- from the verifying machine's ACL, possibly through certificates and then back to the verifying machine. Alternatively, one might say that the only root of an authorization certificate chain is the verifier.

SPKI allows its principals to define groups, or sets, of principals by means of name certificates. Each group has a name and a set of members. The name is local to some principal, which is the "owner" of the group. Only a group's owner may change its definition. A group can be an explicit list of the group's members (either as a list of principals and/or names of principals), or it can be defined in terms of other groups. Any principal can define his own groups and export them via his servers in much the same way as name bindings. The servers can issue membership certificates based on the groups' definitions.

If, from a practical point of view, mobile applications are programmed in the Java language, and programs and applications can be distributed using a specific file format that packages all files that compose the application. Moreover, this format fits the requirements of code certification, since a single file can easily be hashed to create a certificate.

As for the certificate format, SPKI certificates fit the above expressed requirements. Moreover, the fact that there is no need for an infrastructure of certification authorities in place will make the present invention easy to deploy.

## Claims

1. Mobile code comprising a resource usage needs section containing at least a resource requirements list including those resources needed by the mobile code to be properly executable plus those resources that are known a priori to be accessed when executing the mobile code.

2. Mobile code according to claim 1, wherein the resource usage needs section of the mobile code is a certificate which is unique for each different mobile code.

3. Mobile code according to claim 1 or 2, wherein the resource usage needs section of the mobile code or the certificate contains, in addition to the resource requirements list, any of the following information:
a) issuer of the certificate information identifying the entity issuing the certificate,
b) subject information identifying the mobile code to which the certificate is referred, and
c) validity period information stating the period of time within which the certificate is valid.

4. Mobile code according to claim 3, wherein the resource requirements list contains any of the following information:
a) name of the resource information specifying the type of resource,
b) action on the resource specifying as to how the resource should be used,
c) upper quantitative limit information stating the maximum usage of the resource from a quantitative point of view, and
d) upper qualitative limit information stating the maximum usage of the resource from a qualitative point of view.

5. Mobile code according to any of the preceding claims, wherein an execution program is provided in an execution environment of the user, the execution program defining at least the resource access policy that will be applied to the mobile code on execution.

6. Method for resource management for mobile code using a mobile code of any of the claims 1 to 5, wherein:
(a) in the case of downloading upon request a mobile code from a principal to a user, in a the negotiation phase in the beginning of the downloading process, a RRL list is transferred from the principal to the user informing the user of the resource requirements of the mobile code, and
(b) in the case of uploading upon request a mobile code from a resource owner to a user, in a the negotiation phase in the beginning of the uploading process, a RRL list is transferred from the resource owner to the user informing the user of the resource requirements of the mobile code.

7. Method according to claim 6, wherein, in the negotiation phase, the downloading process further includes user and/or platform authentication, specifying restrictions imposed by the mobile code distributor as to the user and/or platform involved, and/or payment/licensing evaluation, comprising the financial aspects of the mobile code transfer; and wherein, in the negotiation phase, the uploading process further includes user and/or platform authentication information specifying restrictions imposed by the resource owner as to the user and/or platform involved, and/or payment/licensing evaluation information comprising the financial aspects of the mobile code transfer.

8. A method for transferring mobile code through an active network for resource management for mobile code using a mobile code of any of the claims 1 to 5, the network comprising a plurality of active network nodes, wherein the active flow is composed of the following information:
a) a mobile code that needs to be executed in a node which is crossed by the active flow,
b) a RRL-list issued by the entity that sends the mobile code to the network,
c) a certificate or a sequence of certificates whose first entry is a certificate from the network operator to the starting entity, and
e) the data themselves.

9. Method according to claim 8, further comprising any of the following steps:
a) verifying that the mobile code integrity has not been compromised,
b) reducing the certificate chain associated with the mobile code to verify trust transfer from the execution environment to the supplier, and
c) create a process-like structure for the mobile code which isolates the mobile code from other programs running on the same execution environment.

10. Method according to claim 8 or 9, wherein the mobile code or the execution program or its reduced program is configured to discover that a given resource is available through the execution environment and to request access to it thus to dynamically request access to other resources, and wherein the execution environment will decide on run time whether to grant or to deny such access.
